# EUROPÄISCHE PATENTSCHRIFT

(11) **EP 2 569 731 B1**
(45) Veröffentlichungstag und Bekanntmachung des Hinweises auf die Patenterteilung: **18.06.2014**
(21) Anmeldenummer: 11738943.7
(22) Anmeldetag: 28.04.2011
(51) Int. Cl.: G06K 9/50, G06K 9/00

(54) **VERFAHREN ZUR ERKENNUNG VON VERKEHRSZEICHEN**
METHOD FOR DETECTING TRAFFIC SIGNS
PROCÉDÉ DE RECONNAISSANCE DE SIGNAUX ROUTIERS

(30) Priorität: 14.05.2010 DE 102010020330
(43) Veröffentlichungstag der Anmeldung: 20.03.2013
(73) Patentinhaber: Conti Temic microelectronic GmbH, 90411 Nürnberg (DE)
(72) Erfinder: ZOBEL, Matthias, 88142 Wasserburg (DE)
(86) Internationale Anmeldenummer: PCT/DE2011/000458
(87) Internationale Veröffentlichungsnummer: WO 2011/141016

(56) Entgegenhaltungen:
- WO-A1-91/17518
- DE-A1-102006 053 289
- US-A- 4 901 362
- YONGPING WANG ET AL: "A Method of Fast and Robust for Traffic Sign Recognition", IMAGE AND GRAPHICS, 2009. ICIG '09. FIFTH INTERNATIONAL CONFERENCE ON, IEEE, PISCATAWAY, NJ, USA, 20. September 2009 (2009-09-20), Seiten 891-895, XP031652742, ISBN: 978-1-4244-5237-8

## Beschreibung

Die Erfindung betrifft ein Verfahren zur Erkennung von Verkehrszeichen gemäß dem Oberbegriff des unabhängigen Anspruchs und eine entsprechende Vorrichtung nach Anspruch 14.

Moderne Fahrerassistenzsysteme werden zunehmend mit einem elektronischen Verkehrszeichenerkennungssystem ausgerüstet, um beispielsweise den Fahrer bei einer Überschreitung der zulässigen Höchstgeschwindigkeit zu warnen. Hierzu nimmt eine Kamera die Umgebung vor dem Fahrzeug auf und liefert entsprechende Bilddaten an einen Bordcomputer, der mittels eines Algorithmus die Bilddaten analysiert und klassifiziert, um hieraus ein Verkehrszeichen zu identifizieren. Ein solches Verfahren ist z.B. aus der DE 198 52 631 A1 bekannt.

Bekannte Verfahren zur Verkehrszeichenerkennung arbeiten nach dem Schema, wonach in einer Detektionsphase im Kamerabild Bildregionen identifiziert werden, die potentielle Verkehrszeichen enthalten können. Diese potentiellen Verkehrszeichen werden in einem zweiten Verfahrensschritt anschließend einem Klassifikator vorgelegt, der entscheidet, ob sich in der Bildregion ein Verkehrszeichen befindet und um welches Verkehrszeichen es sich handelt.

Der Klassifikator bzw. die Klassifikationseinheit kann lernbasiert arbeiten, wie beispielsweise aus der DE 10 2005 062 154 A1 bekannt ist. Hier wird der Klassifikator vorab über eine Menge von Lernbeispielen entsprechend trainiert, deren Ausprägungen von dem gewählten Detektionsverfahren abhängen. Zum Beispiel ist es zur Erkennung von Geschwindigkeitsbegrenzungen bekannt, in der Detektionsphase mittels Bildverarbeitungsphasen Kreise im Kamerabild zu suchen und das umgebende Rechteck als Ausschnitt dem Klassifikator vorzulegen, wobei dieses Merkmal "Kreise" eine bestimmte Klasse von Verkehrszeichen definiert. Ein solches Verfahren zur Erkennung von kreisförmigen Objekten in Bilddaten eines Bildsensors ist aus der DE 10 2005 017 541 A1 bekannt.

Die DE 10 2006 053 289 A1 zeigt ein Verfahren und eine Vorrichtung zur Bestimmung einer Durchfahrmöglichkeit in einem Fahrzeug mit den Merkmalen des Oberbegriffs des Anspruchs 1. Hierbei werden mit einer elektronischen Kamera Umgebungsbilder aufgenommen und mit einem Verkehrszeichenerkennungsverfahren ausgewertet. Während des Verkehrszeichenerkennungsverfahrens wird das Umgebungsbild, welches zur Erkennung von Objektkanten abgeleitet wurde, zum Auffinden von runden Verkehrszeichen mit einem Suchstern geraster abgetastet. Ein rundes Objekt wird erkannt, wenn die Abstandswerte vom Mittelpunkt des Suchsterns zu Kanten des Objekts für alle Geraden des zugehörigen Suchsterns annähernd gleich sind. Anschließend kann mittels eines Zeichenerkennungsverfahrens ein zahlenmäßiger Inhalt eines runden Verkehrszeichens interpretiert werden, das z.B. eine maximale Durchlasshöhe anzeigt.

Der Erfindung liegt die Aufgabe zugrunde, ein Verfahren zur Erkennung von Verkehrszeichen anzugeben, welches eine schnelle und zuverlässige Erkennung von Verkehrszeichen ermöglicht und nur geringe Anforderungen an die Ressourcen einer Steuereinheit stellt. Gerade für den Einsatz in eingebetteten Systemen ist eine geringe Rechenlast der eingesetzten Verfahren eines der herausfordernden Entwicklungsziele.

Diese Aufgabe wird durch die Merkmale des unabhängigen Anspruchs gelöst. Vorteilhafte Weiterbildungen der Erfindung ergeben sind aus den Unteransprüchen, wobei auch Kombinationen und Weiterbildungen einzelner Merkmale miteinander denkbar sind.

Bei einem erfindungsgemäßen Verfahren zur Verkehrszeichenerkennung wird mit Hilfe einer Kamera eine Fahrzeugumgebung aufgenommen. Die Bilddaten der Kamera werden analysiert, wobei mindestens ein Bildbereich ermittelt wird, der ein potentielles Verkehrszeichen enthält. Ein Beispiel hierfür ist die Suche nach kreisförmigen Objekten im Bild. Der Bildbereich mit dem potentiellen Verkehrszeichen wird einer ersten Klassifikationseinheit vorgelegt, die das potentielle Verkehrszeichen aufgrund mindestens eines klassenspezifischen Merkmals als Verkehrszeichen dieser bestimmten Klasse identifiziert, und der Bildausschnitt, der das Verkehrszeichen enthält, wird weiter ausgewertet. Kann die erste Klassifikationseinheit in einem Bildbereich mit einem potentiellen Verkehrszeichen dieses nicht als Verkehrszeichen einer bestimmten Klasse identifizieren, wird dieser Bildbereich vorzugsweise verworfen und es werden weitere Bilddaten analysiert.

Weist beispielsweise ein rundes Verkehrszeichen als klassenspezifisches Merkmal eine weiße kreisförmige Grundfläche und einen roten Außenring auf, so wird das Verkehrszeichen als ein Verkehrszeichen dieser Klasse identifiziert. Zu dieser Klasse zählen insbesondere Verkehrszeichen, die eine zulässige Höchstgeschwindigkeit vorgeben. Im Wiener Übereinkommen über Straßenverkehrszeichen haben sich mehrere europäische Länder teilweise auf eine Vereinheitlichung der Verkehrszeichen geeinigt, so dass beispielsweise eine Geschwindigkeitsbegrenzung charakteristisch aus einem runden Schild mit rotem Außenring und einer Zahl für die Geschwindigkeitsbegrenzung bestehen soll.

Zur Identifizierung des vorliegenden Verkehrszeichens wird nach dem erfindungsgemäßen Verfahren zunächst der informationstragende Teil ermittelt und anschließend wird dieser an eine zweite Klassifikationseinheit zur Bestimmung des Inhalts übergeben. Der informationstragende Teil eines Verkehrszeichens kann z.B. der Zahlenwert einer Geschwindigkeitsbegrenzung sein. Dieser wird im Folgenden auch als Ziffernblock bezeichnet. Alternativ oder kumulativ umfasst der informationstragende Teil Buchstaben und/oder Symbole, z.B. das Symbol für ein Überholverbot.

In einem ersten Schritt zur Bestimmung des informationstragenden Teils eines Verkehrszeichens wird eine Helligkeitsanalyse oder Farbintensitätsanalyse der Fläche des Verkehrszeichens entlang von radial verlaufenden Abtaststrahlen ausgehend von einem Ausgangspunkt innerhalb der Fläche des Verkehrszeichens durchgeführt. Unter Farbintensitätsanalyse wird eine Analyse eines oder mehrerer Farbintensitätswerte (z.B. R; G; B- oder C; M; Y-Werte) eines Bildpunkts im Vergleich zu einem entlang des Abtaststrahls benachbarten Bildpunkt, wodurch Farbübergänge z.B. von rot auf weiss ermittelt werden. Die Helligkeits- oder Farbintensitätsanalyse verläuft dabei bevorzugt vom Ausgangspunkt der Fläche des Verkehrszeichens entlang der Abtaststrahlen nach außen. Aus der Helligkeits- oder Farbintensitätsanalyse werden potentielle Konturpunkte eines informationstragenden Teils des Verkehrszeichens ermittelt. Es wird mit anderen Worten die Helligkeitsoder Farbintensitätsgrenze ermittelt, die durch die Kontur des informationstragenden Teils bzw. Ziffernblocks vorgegeben ist. Im Anschluss daran wird ein Bereich der Fläche des Verkehrszeichens als informationstragender Teil des Verkehrszeichens extrahiert, der alle ermittelten potentiellen Konturpunkte einschließt. Der extrahierte Bereich wird zur semantischen Interpretation an eine zweite Klassifikationseinheit übergeben. Diese Klassifikationseinheit liest also den Inhalt des extrahierten Bereichs aus, z.B. den Wert der auf dem Verkehrszeichen angegebenen zulässigen Höchstgeschwindigkeit, so dass am Ende des Verfahrens z.B. die Information "Erkennung eines Verkehrszeichen ,Zulässige Höchstgeschwindigkeit 60 km/h' im Kamerabild" ausgegeben werden kann. Diese Information kann dem Fahrer beispielsweise über ein Display angezeigt werden oder weiteren Assistenzsystemen zur Verfügung gestellt werden.

Das erfindungsgemäße Verfahren zeichnet sich vorteilhaft durch die Helligkeits- oder Farbintensitätsanalyse entlang von Abtaststrahlen aus, die im Gegensatz zu typischerweise verwendeten zweidimensionalen Kantenfindungsoperatoren bei der Verkehrszeichenerkennung, wie z.B. Sobel- oder Canny-Operatoren, wesentlich geringere Anforderungen an die Rechenkapazität und -speicher stellt. Die Bestimmung des Verkehrszeichens erfolgt dadurch schneller. Zudem ist das Verfahren sehr robust, da der informationstragende Teil aufgrund seiner Kontur ermittelt wird. Vergleichbare Verfahren zur Verkehrszeichenerkennung sind häufig darauf angewiesen sind, dass der informationstragende Teil immer eine Standardgröße und -position innerhalb des Verkehrszeichens hat, da sonst der informationstragende Teil nicht oder nicht korrekt erkannt werden kann.

In einer vorteilhaften Ausgestaltung der Erfindung legt die erste Klassifikationseinheit den Ausgangspunkt für die Helligkeitsoder Farbintensitätsanalyse fest, von dem aus bevorzugt die Abtaststrahlen nach außen verlaufen. Bei der Identifikation eines potentiellen Verkehrszeichens als Verkehrszeichen einer bestimmten Klasse kann die erste Klassifikationseinheit einen geeigneten Ausgangspunkt zur Ermittlung des informationstragenden Teils des Verkehrszeichens dieser Klasse festlegen.

In einer vorteilhaften Ausgestaltung der Erfindung wird der Mittelpunkt der Fläche des Verkehrszeichens ermittelt und als definierter Ausgangspunkt verwendet, von dem die Abtaststrahlen aus radial verlaufen.

Erfindungsgemäß umfasst die Helligkeits- oder Farbintensitätsanalyse eine eindimensionale Gradientenbildung der Helligkeitsoder Farbintensitätswerte der Bildpunkte entlang der Abtaststrahlen. Es wird also auf jedem Abtaststrahl der Helligkeitsoder Farbintensitätsunterschied benachbarter Bildpunkte zueinander bestimmt. Potentielle Konturpunkte werden hierbei aus Maximalwerten der Gradientenbildung ermittelt. Die Berechnung des eindimensionalen Gradienten ist deutlich leichter und daher schneller als die Berechnung, die mittels zweidimensionaler Kantenfindungsoperatoren erforderlich ist, welche häufig bei der Verkehrszeichenerkennung eingesetzt wird.

Gemäß einer bevorzugten Ausführungsform wird von der ersten Klassifikationseinheit die Innenfläche des Verkehrszeichens einer bestimmten Klasse ermittelt. Die Helligkeits- oder Farbintensitätsanalyse entlang der Abtaststrahlen erfolgt dann nur innerhalb der Innenfläche des Verkehrszeichens. Wird beispielsweise ein Verkehrszeichen der Klasse *weiße kreisförmige Grundfläche mit einem roten Außenring* von der ersten Klassifikationseinheit identifiziert, so kann die Helligkeits- oder Farbintensitätsanalyse auf den Bereich der inneren weißen kreisförmigen Grundfläche beschränkt werden. Hierzu kann dieser Bereich maskiert werden oder die Länge der Abtaststrahlen an die Ausdehnung der Grundfläche bzw. Innenfläche angepasst werden.

In einer bevorzugten Ausführungsform wird bei einem Verkehrszeichen mit hellem Hintergrund der Bereich als informationstragender Teil extrahiert, bei dem die potentiellen Konturpunkte als Dunkel-Hell-Übergänge bei einer vom Ausgangspunkt nach außen verlaufenden Helligkeitsanalyse ermittelt wurden. Hierbei sollte der Bereich, in dem die Helligkeit analysiert wird, entsprechend der vorherigen Ausführungsform angepasst werden. Dadurch wird sichergestellt, dass der vollständige Ziffernblock bzw. der vollständige informationstragende Teil des Verkehrszeichens extrahiert und weitergegeben wird. Durch die Auswahl der am weitesten vom Mittelpunkt entfernten potentiellen Konturpunkte aus Dunkel-Hell-Übergängen wird verhindert, dass mögliche relevante Bildpunkte bzw. Zeichen/Symbole des Verkehrszeichen nicht extrahiert werden und das Verkehrszeichen von der zweiten Klassifikationseinheit falsch interpretiert wird bzw. nicht erkannt werden kann.

In einer bevorzugten Ausführungsform wird bei einem Verkehrszeichens mit dunklem Hintergrund der Bereich als informationstragender Teil extrahiert, bei dem die potentiellen Konturpunkte als Hell-Dunkel-Übergänge bei einer vom Ausgangspunkt nach außen verlaufenden Helligkeitsanalyse ermittelt wurden. Eine solche Darstellung von Verkehrszeichen findet sich beispielsweise auf elektronischen Anzeigentafeln mit schwarzem Hintergrund.

Bei einer vorteilhaften Ausführung des Verfahrens zur Verkehrszeichenerkennung ist der Bereich eines Verkehrszeichens, der als informationstragender Teil extrahiert wird, das kleinste Rechteck, das alle potentiellen Konturpunkte einschließt. Dabei wird nur der Bereich an die zweite Klassifikationseinheit zur semantischen Interpretation übergeben, der die zur Klassifikation notwendigen Informationen enthält. Dadurch wird der zur Klassifikation benötigte Speicher sowie die dazu benötigte Zeit minimiert.

Bei einer bevorzugten Ausgestaltung des Verkehrszeichenerkennungsverfahrens wird vor der Helligkeits- oder Farbintensitätsanalyse die Fläche des Verkehrszeichens einer Helligkeitsnormierung, einer Rauschunterdrückung, einer Maskierung des die Fläche umgebenden Bereichs und/oder einer weiteren Bearbeitung unterzogen, bei der die Umgebung der Fläche oder die Fläche selbst von Einflüssen bereinigt wird, die die Helligkeits- oder Farbintensitätsanalyse der Fläche negativ beeinflussen. Vorteilhaft werden dadurch bereinigte Bildausschnitte weitergegeben, die die Bestimmung des informationstragenden Teils des Verkehrszeichens nicht nur vereinfachen sondern auch unterstützen. Dies ist beispielsweise dann gegeben, wenn die Bildpunkte des das Verkehrszeichen enthaltenden Bildausschnitts jeweils einem Helligkeitswert zugeordnet werden, d.h. alle dunklen bzw. nicht hellen Bildpunkte werden einem bestimmten dunklen Helligkeitswert zugeordnet und alle hellen bzw. nicht dunklen Bildpunkte werden einem hellen Helligkeitswert zugeordnet, also beispielsweise eine Umwandlung des Bildausschnitts in ein binäres Schwarzweißbild.

Bei einer vorteilhaften Ausführung des Verfahrens zur Verkehrszeichenerkennung wird die Helligkeits- oder Farbintensitätsanalyse der Fläche des Verkehrszeichens entlang einer bestimmten Anzahl an radial verlaufenden Abtaststrahlen durchgeführt, wobei die Anzahl an radial verlaufenden Abtaststrahlen von der ermittelten Anzahl an Bildbereichen mit potentiellen Verkehrszeichen in einem Kamerabild abhängt oder von der Anzahl der durch die erste Klassifikationseinheit in einem Kamerabild identifizierten Verkehrszeichen abhängt. Dadurch kann die verfügbare Rechenleistung zur Ermittlung des informationstragenden Teils von Verkehrszeichen an die in einem Kamerabild gleichzeitig aufgetretenen potentiellen oder vorläufig identifizierten Verkehrszeichen angepasst werden.

Eine weitere bevorzugte Ausführung des Verfahrens sieht vor, dass in einem ersten Durchlauf eine minimale Anzahl der radial verlaufenden Abtaststrahlen vorbestimmt ist, z.B. auf vier oder acht. Der so extrahierte Bereich wird an die zweite Klassifikationseinheit zur Interpretation des Inhalts gegeben. Sofern die Klassifikationseinheit den extrahierten Bereich nicht erfolgreich klassifizieren kann, wird die Anzahl der Abtaststrahlen kontinuierlich gesteigert, z.B. um einen/zwei weitere oder die Anzahl wird verdoppelt. Dies ermöglicht vorteilhafterweise eine Klassifikation des Verkehrszeichens mit bedarfsabhängiger Auslastung des Bordcomputers bzw. der Steuereinheit. Auch kann dadurch die Bestimmungszeit weiter verkürzt werden, wenn z.B. vier Abtaststrahlen schon ausreichen (im Vergleich zu acht vorgesehenen Abtaststrahlen).

Vorzugsweise wird die Anzahl der Abtaststrahlen bei der vorherigen Ausführungsform nur bis zu einer maximal festgelegten Anzahl erhöht. Damit wird eine maximale Auslastung des Bordcomputers bzw. der Steuereinheit durch dieses Verfahren festgelegt.

Vorteilhaft ist eine Ausführung des Verfahrens zur Verkehrszeichenerkennung, bei dem benachbarte Abtaststrahlen, die vom Ausgangspunkt radial nach außen verlaufen, jeweils denselben Winkel zueinander einschließen.

Besonders bevorzugt sind vierundzwanzig Abtaststrahlen vorgesehen, wobei benachbarte Abtaststrahlen jeweils einen Winkel von 15° einschließen. Mit vierundzwanzig Abtaststrahlen ist in vielen Fällen eine hinreichend zuverlässige Bestimmung des Ziffernblocks bzw. des informationstragenden Teils gewährleistet. Eine falsche Interpretation des Verkehrszeichens durch die zweite Klassifikationseinheit wird verhindert und die Zahl der Fälle minimiert, in denen das Verkehrszeichen nicht erkannt werden kann. Darüber hinaus wird vorteilhaft die maximale Auslastung eines Speichers und des Bordcomputers bzw. der Steuereinheit festgelegt.

Gegenstand der Erfindung ist weiterhin eine Vorrichtung zur Verkehrszeichenerkennung, die eine Kamera zur Aufnahme einer Fahrzeugumgebung und eine Bildverarbeitungseinheit umfasst. Eine erste Klassifikationseinheit umfasst Mittel zur Ermittlung eines informationstragenden Teils eines Verkehrszeichens aus den Bilddaten der Kamera und. Vorgesehen sind Mittel zur Extraktion des Bereichs des Verkehrszeichens, der den informationstragenden Teil umfasst, sowie zur Weitergabe an eine zweite Klassifikationseinheit zur semantischen Interpretation.

Weitere Vorteile der Erfindung gehen aus der Beschreibung und den Zeichnungen hervor. Ausführungsbeispiele sind in der Zeichnung vereinfacht dargestellt und in der nachfolgenden Beschreibung näher erläutert.

Es zeigen:
- Fig. 1a:: Schematische Darstellung der Extraktion eines numerischen informationstragenden Teils eines Verkehrszeichens
- Fig. 1b:: Extraktion eines informationstragenden Teils eines Verkehrszeichens mit symbolischer Information
- Fig. 2:: Flussdiagramm des Verfahrens zur Extraktion des informationstragenden Teils eines Verkehrszeichens.
- Fig. 3:: ein maskiertes Verkehrszeichen mit potentiellen Konturpunkten des informationstragenden Teils
- Fig. 4a bis d:: Ermittlung des informationstragenden Teils auf der Innenfläche eines Verkehrszeichens mittels Helligkeitsanalyse entlang von Abtaststrahlen

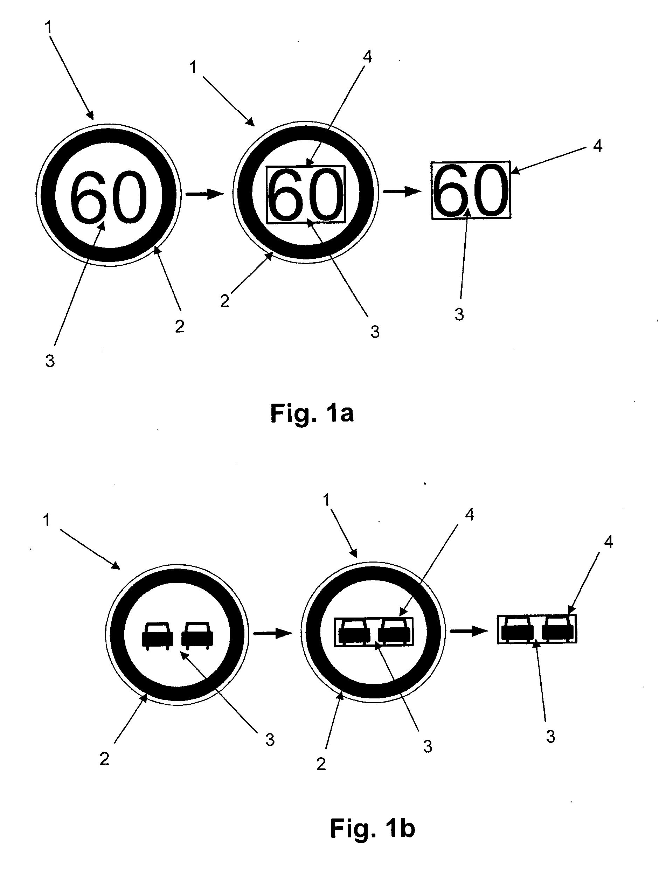

Fig. 1a zeigt ein Verkehrszeichen 1 der Klasse der Vorschriftzeichen, das ein Verkehrszeichen 1 für eine Geschwindigkeitsbegrenzung ist. Die Klasse von geschwindigkeitsbegrenzenden Verkehrszeichen 1 ist kreisförmig, weist einen roten Rand 2 auf und stellt die zulässige Höchstgeschwindigkeit idealerweise mittig als Zahl auf der Innenfläche 17 innerhalb des roten Rands 2 dar. In Fig. 1a hat das Verkehrszeichen 1 beispielhaft eine Geschwindigkeitsbegrenzung von "60" (Kilometer pro Stunde). Dieser Wert ist der informationstragende Teil 3 des Verkehrszeichen 1 und wird auch als Ziffernblock bezeichnet. In Fig. 1a ist links das Verkehrszeichen 1 als solches dargestellt, in der Mitte ist zusätzlich ein Begrenzungsrahmen 4 angegeben, der den informationstragenden Teil 3 des Verkehrszeichen 1 umschließt, und rechts der extrahierte informationstragende Teil 3 mit Begrenzungsrahmen 4.

Fig. 1b zeigt analog zu Fig. 1a die, Darstellungen für ein Verkehrszeichen 1, das ein Überholverbot darstellt. Im Unterschied zur Geschwindigkeitsgrenzung von Fig. 1a liegt hier der informationstragende Teil 3 als Symbol vor: eine Rückansicht eines roten Autos links neben einem roten Auto rechts. Der informationstragende Teil 3 könnte auch Buchstaben umfassen (z.B. "3,8m" maximalzulässige tatsächliche Höhe in Metern).

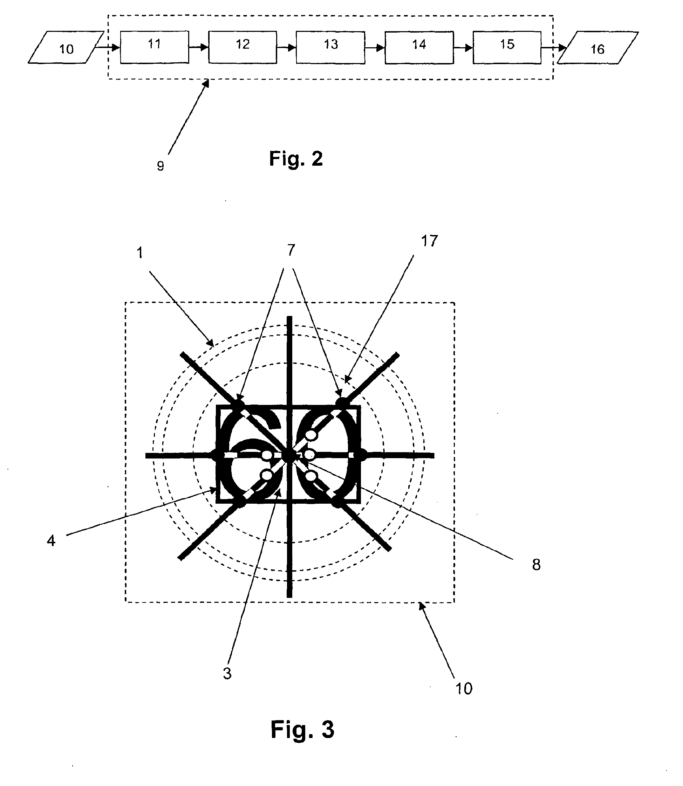

Das Flussdiagramm in Fig. 2 zeigt den Ablauf eines Verfahrens zum Extrahieren des informationstragenden Teils 3 eines Verkehrszeichen 1, nachfolgend Extraktionsverfahren 9 genannt. Der informationstragende Teil 3 des Verkehrszeichen 1 wird anschließend auch als Ziffernblock bezeichnet, da hier beispielhaft eine Geschwindigkeitsbegrenzung wie in Fig. 1a extrahiert bzw. erkannt werden soll.
Nachdem in einem Kamerabild eine Region mit einem Verkehrszeichen 1 identifiziert wurde, wird dieser Bildausschnitt 10, der das vollständige Verkehrszeichen 1 enthält, d.h. Rand 2 und Ziffernblock, in einem optionalen ersten Verfahrensschritt 11 einer Vorverarbeitung unterzogen. Der Bildausschnitt 10 kann einer Rauschunterdrückung, einer Helligkeitsnormierung oder einer Maskierung des roten Rands 2 des Verkehrszeichens 1 unterzogen werden.

In einem zweiten Verfahrensschritt 12 erfolgt das "Abtasten" des gegebenenfalls vorverarbeiteten Bildausschnitts 10. Dabei werden ausgehend vom Ausgangspunkt, in diesem Fall dem Mittelpunkt 8 der Fläche des Verkehrszeichen 1 entlang einer Menge von radialen Abtaststrahlen 5 Helligkeiten oder Farbintensitätswerte der Bildpunkte des Bildausschnitts 10 abgetastet und die Helligkeiten oder Farbintensitäten gespeichert.

In einem dritten Verfahrensschritt 13 erfolgt eine Gradientenbildung der Helligkeits- oder Farbintensitätswerte entlang dieser Abtaststrahlen 5. Durch die eindimensionale Gradientenbildung auf den Bildpunkten des Ziffernblocks entlang der Abtaststrahlen 5, wird auf jedem Abtaststrahl 5 der Helligkeits- oder Farbintensitätsunterschied benachbarter Bildpunkte zueinander bestimmt. Die Helligkeits- oder Farbintensitätsunterschiede in den abgetasteten Bildpunkten werden nach der Bestimmung der Helligkeits- oder Farbintensitätsunterschiede gespeichert.

In einem vierten Verfahrensschritt 14 werden Konturpunkthypothesen aus den ermittelten Helligkeits- oder Farbintensitätsunterschieden gebildet. Aus den gespeicherten Helligkeits- oder Farbintensitätsunterschieden und den gespeicherten Helligkeiten oder Farbintensitäten entlang der einzelnen Abtaststrahlen 5 werden die potentiellen Konturpunkte 6 des Ziffernblocks an Punkten mit großen Helligkeits- oder Farbintensitätsunterschieden bestimmt. Dabei werden beispielsweise für die Erkennung eines Verkehrszeichens 1 mit einem dunklem Ziffernblock auf hellem Hintergrund nur die Konturpunkte berücksichtigt, die einem Dunkel-HellÜbergang entsprechen.

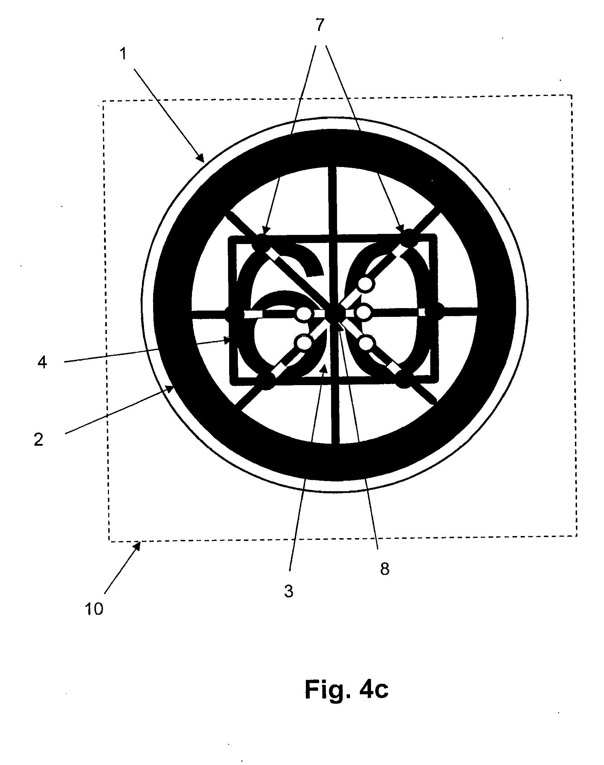

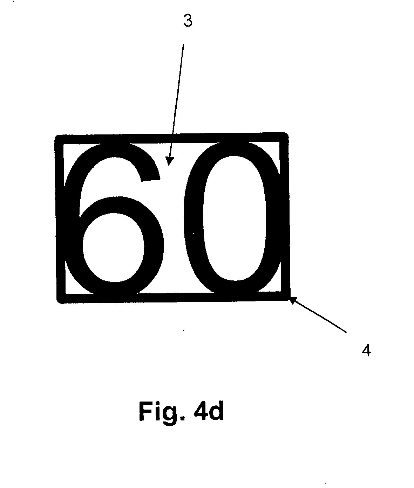

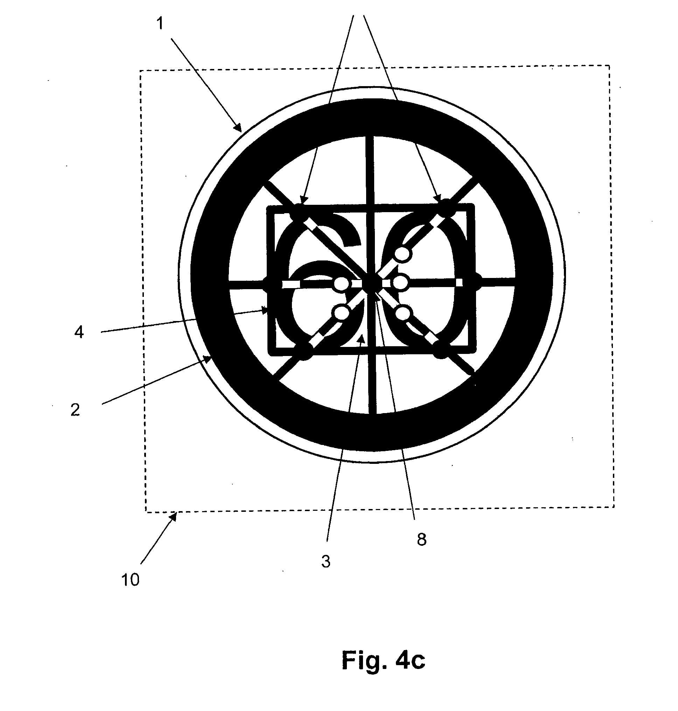

In einem fünften Verfahrensschritt 15 erfolgt die Extraktion des Ziffernblocks. Aus den Konturpunkthypothesen bzw. den potentiellen Konturpunkten 6 können hierbei tatsächliche Konturpunkte 7 bestimmt werden, indem auf jedem Abtaststrahl 5 der äußerste potentielle Konturpunkt 6 ermittelt wird. Dabei sollte sichergestellt werden, dass tatsächliche Konturpunkte 7 nur innerhalb der Innenfläche 17 des Verkehrszeichens 1 liegen. Es wird der Bereich ermittelt, der alle Konturpunkte 7 enthält, wobei dieser Bereich auch alle potentiellen Konturpunkte 6 enthält. Dieser Bereich kann dabei das kleinste die Kontur umschreibende und alle potentiellen Konturpunkte 6 einschließende Rechteck sein. Der Begrenzungsrahmen 4 in den Figuren 3, 4c und 4d stellt das die Kontur umschreibende Rechteck dar. Die Kontur bzw. der Begrenzungsrahmen 4 mit dem darin enthaltenden Ziffernblock aus dem Bildausschnitt 10 wird extrahiert und anschießend erfolgt die Ausgabe des informationstragenden Teils 3 bzw. die Ziffernblockausgabe 16. Der extrahierte Ziffernblock kann nach dem Extraktionsverfahren 9 in einer Anzeigeeinheit des Fahrzeugs für den Fahrzeugführer dargestellt oder für eine weitere Be- oder Verarbeitung weitergegeben werden, insbesondere semantisch interpretiert werden.

Fig. 3 zeigt ein maskiertes Verkehrszeichen 1. Nach der Vorbearbeitung ist der Bildausschnitt 10 von Bildpunkten bzw. störenden Einflüssen bereinigt, so dass nur der Bereich der Innenfläche 17 (innerhalb des innersten gestrichelten Kreises) einer Helligkeitsanalyse unterzogen wird. Die rote Umrandung 2 und der äußere Rand des Verkehrszeichens 1 werden nicht berücksichtigt (äußere gestrichelte Kreise), da hier bei der Helligkeitsanalyse falsche potentielle Konturpunkte 6 entlang der Abtaststrahlen 5 ermittelt werden könnten.
Der rote Rand 2 und weiter außen liegende Bildpunkte könnten beispielsweise mit geeigneten Bildpunkten überschrieben werden. So kann beispielsweise der Rand 2 mit Bildpunkten entsprechend den Bildpunkten der Umgebung des Ziffernblocks bzw. des Hintergrunds des Verkehrszeichens 1 ersetzt werden, dann spielt die Länge der Abtaststrahlen 5 keine Rolle. Eine Erkennung des roten Randes wäre auch durch eine Farbintensitätsanalyse entlang der Abtaststrahlen 5 möglich (z.B. als weiß-rot Übergang im äußeren Bereich)

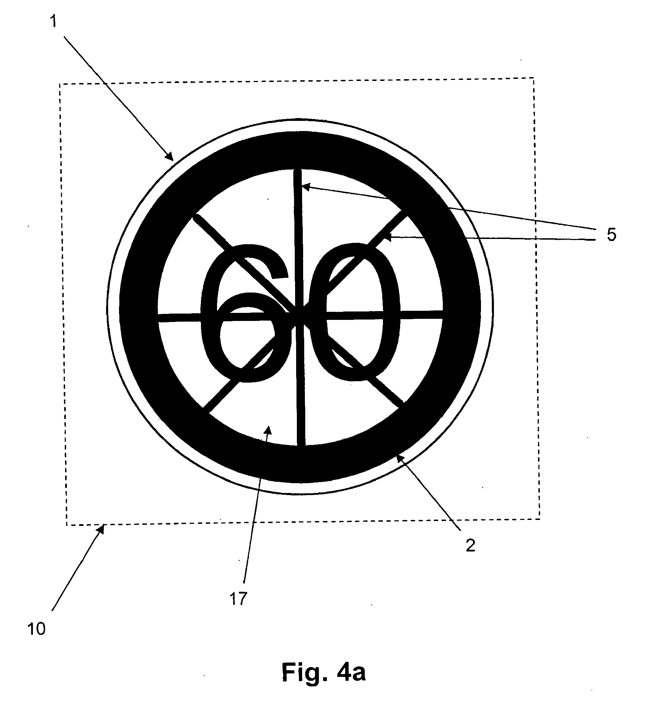

Fig. 4a zeigt einen Bildausschnitt 10, der ein Verkehrszeichen 1 enthält, das von einer ersten Klassifizierungseinheit aufgrund der weißen kreisförmigen Grundfläche bzw. Innenfläche 17 und dem ringförmigen roten Rand 2 als Verkehrszeichen 1 mit diesen charakteristischen Merkmalen identifiziert wurde. Auch die Information über Lage und Ausdehnung der Innenfläche 17 können aufgrund der ersten Klassifizierung vorliegen.
Ein geeigneter Ausgangspunkt zur Ermittlung der Kontur des informationstragenden Teils 3 ist in diesem Fall der Mittelpunkt 8 der Innenfläche 17 des Verkehrszeichens 1. Von diesem Ausgangspunkt sind acht Abtaststrahlen 5 vorgesehen, die radial nach außen bis zum Rand der Innenfläche 17 verlaufen und jeweils um 45° versetzt sind. Entlang dieser Abtaststrahlen 5 wird die Helligkeit der dort liegenden Bildpunkte des Bildausschnitts 10 vom Ausgangspunkt nach außen ermittelt. Alternativ könnte statt der Helligkeits- eine Farbintensitätsanalyse durchgeführt werden, beim dargestellten Verkehrszeichen 1 bietet sich aber die im Folgenden geschilderte Helligkeitsanalyse an.
Das Verfahren geht dabei davon aus, dass sich der Ziffernblock bzw. informationstragende Teil 3 in der Helligkeit von dem ihn umgebenden Bereich der Innenfläche 17 unterscheidet. Deshalb wird bei der Helligkeitsanalyse die Helligkeitsgrenze gesucht, die durch die Kontur des Ziffernblocks definiert ist. Bei der Helligkeitsanalyse werden dann die Helligkeitsunterschiede benachbarter Bildpunkte ermittelt und gespeichert.

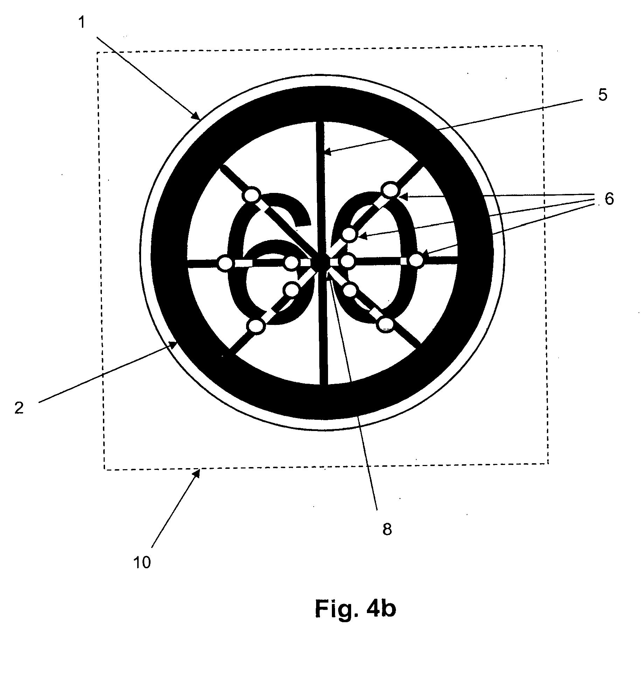

In Fig. 4b sind die potentiellen Konturpunkte 6 dargestellt, die sich aus den ermittelten und gespeicherten Bildpunkten mit Helligkeitsunterschieden ergeben. Da bei dem dargestellten Verkehrszeichen 1 ein heller Innenbereich 17 (z.B. weiße Bildpunkte) und ein dunkler Ziffernblock (z.B. schwarze Bildpunkte) vorliegt, entsprechen die potentiellen Konturpunkte 6 den Helligkeitsänderungen, die von innen nach außen einen Dunkel-Hell-Übergang aufweisen.

In Fig. 4c ist dargestellt, welche der potentiellen Konturpunkte 6 tatsächlichen Konturpunkten 7 entsprechen und wie die ermittelten Konturpunkte (6 oder 7) anschließend zur Ziffernblockextraktion verwendet werden. Die potentiellen Konturpunkte 6, die auf ihrem Abtaststrahl 5 am weitesten vom Ausgangspunkt entfernt sind, entsprechen tatsächlichen Konturpunkten 7, da sie in dieser Richtung die Konturgrenze des informationstragenden Teils 3 festlegen. Es wird der Bereich des Bildausschnitts 10 des Verkehrszeichens 1 extrahiert, der alle potentiellen Konturpunkte 6 enthält. Der Bereich kann beispielsweise die Form eines Rechtecks aufweisen und die Konturpunkte 7 können auf einem Rand des Rechtecks liegen bzw. das Rechteck begrenzen. Es müssen aber nicht alle Konturpunkte 7 auf dem Rand des Rechtecks liegen. Es wird in Kauf genommen, dass Randbereiche des informationstragenden Teils 3 mitunter bei der Extraktion abgeschnitten werden. Durch eine Erhöhung der Anzahl von Abtaststrahlen 5 kann diesem Informationsverlust entgegengewirkt werden. Bei diesem Extraktionsverfahren 9 wird somit nur der Bereich einer weiteren Klassifikation zugeführt, der zur eindeutigen Klassifikation des Werts bzw. Zeichen/Symbol des Verkehrszeichens 1 notwendig ist. Es können dadurch auch Konturpunkte erkannt und extrahiert werden, deren Helligkeitsverlauf nicht nur rein vertikal oder horizontal verläuft, sondern auch gekrümmte Konturen aufweist.
Der in Fig. 4d dargestellte extrahierte informationstragende Bereich 3 wird an eine zweite Klassifikationseinheit zur semantischen Interpretation übergeben, die in diesem Fall den Wert "60" ermittelt, womit in Kenntnis der Ergebnisse der ersten Klassifikationseinheit das Verkehrszeichen 1 vollständig identifiziert ist.

### Bezugszeichenliste

- 1: Verkehrszeichen
- 2: Ringförmiger roter Rand
- 3: informationstragender Teil
- 4: Begrenzungsrahmen
- 5: Abtaststrahl
- 6: Potentielle Konturpunkte
- 7: Konturpunkte
- 8: Mittelpunkt als Ausgangspunkt
- 9: Extraktionsverfahren
- 10: Bildausschnitt
- 11: Verfahrensschritt 1: Vorverarbeitung des Bildausschnitts
- 12: Verfahrensschritt 2: Abtasten des Ausschnitts entlang radialer Strahlen
- 13: Verfahrensschritt 3: Gradientenbildung entlang der Abtaststrahlen
- 14: Verfahrensschritt 4: Bildung von Konturpunkthypothesen
- 15: Verfahrensschritt 5: Extraktion der Ziffernblockkontur
- 16: Ausgabe des Ziffernblocks
- 17: Innenfläche des Verkehrszeichens

## Patentansprüche

1. Verfahren zur Verkehrszeichenerkennung, bei dem
- mit Hilfe einer Kamera eine Fahrzeugumgebung aufgenommen wird,
- die Bilddaten der Kamera analysiert werden, wobei mindestens ein Bildbereich (10) ermittelt wird, der ein potentielles Verkehrszeichen (1) enthält,
- der Bildbereich (10) mit dem potentiellen Verkehrszeichen (1) einer ersten Klassifikationseinheit vorgelegt wird, die das potentielle Verkehrszeichen (1) aufgrund mindestens eines klassenspezifischen Merkmals als Verkehrszeichen (1) dieser bestimmten Klasse identifiziert,
**dadurch gekennzeichnet, dass**
- eine Helligkeits- oder Farbintensitätsanalyse der Fläche des Verkehrszeichens (1) dessen Klasse identifiziert wurde entlang von radial verlaufenden Abtaststrahlen (5) ausgehend von einem definierten Ausgangspunkt innerhalb der Fläche des Verkehrszeichens (1) durchgeführt wird, wobei die Helligkeits- oder Farbintensitätsanalyse eine eindimensionale Gradientenbildung der Helligkeits- oder Farbintensitätswerte der Bildpunkte entlang der Abtaststrahlen (5) umfasst,
- aus der Helligkeits- oder Farbintensitätsanalyse potentielle Konturpunkte (6) eines informationstragenden Teils (3) des Verkehrszeichens (1) ermittelt werden,
- ein Bereich der Fläche des Verkehrszeichens (1) als informationstragender Teil (3) des Verkehrszeichens extrahiert wird, der alle ermittelten potentiellen Konturpunkte (6) einschließt und
- der extrahierte Bereich an eine zweite Klassifikationseinheit zur semantischen Interpretation in Kenntnis der Ergebnisse der ersten Klassifikationseinheit übergeben wird.

2. Verfahren nach Anspruch 1,
**dadurch gekennzeichnet, dass**
die erste Klassifikationseinheit den definierten Ausgangspunkt für die Helligkeits- oder Farbintensitätsanalyse festlegt.

3. Verfahren nach Anspruch 1 oder 2,
**dadurch gekennzeichnet, dass**
der Mittelpunkt (8) der Fläche des Verkehrszeichens (1) ermittelt und als definierter Ausgangspunkt verwendet wird.

4. Verfahren nach einem der vorhergehenden Ansprüche,
**dadurch gekennzeichnet, dass**
von der ersten Klassifikationseinheit die Innenfläche des Verkehrszeichens (1) einer bestimmten Klasse ermittelt wird und die Helligkeits- oder Farbintensitätsanalyse entlang der Abtaststrahlen (5) nur innerhalb der Innenfläche des Verkehrszeichens (1) erfolgt.

5. Verfahren nach Anspruch 4,
**dadurch gekennzeichnet, dass**
bei einem Verkehrszeichen (1) mit hellem Hintergrund der Bereich als informationstragender Teil (3) extrahiert wird, bei dem bei der Helligkeitsanalyse die potentiellen Konturpunkte (6) entlang der Abtaststrahlen (5) vom Ausgangspunkt nach außen als Dunkel-Hell-Übergänge ermittelt wurden.

6. Verfahren nach Anspruch 4,
**dadurch gekennzeichnet,**
**dass** bei einem Verkehrszeichen (1) mit dunklem Hintergrund der Bereich als informationstragender Teil (3) extrahiert wird, bei dem bei der Helligkeitsanalyse die potentiellen Konturpunkte (6) entlang der Abtaststrahlen (5) vom Ausgangspunkt nach außen als Hell-Dunkel-Übergänge ermittelt wurden.

7. Verfahren nach einem der vorhergehenden Ansprüche,
**dadurch gekennzeichnet,**
**dass** der Bereich des Verkehrszeichens (1), der als informationstragender Teil (3) extrahiert wird, das kleinste Rechteck (4) ist, das alle potentiellen Konturpunkte (6) einschließt.

8. Verfahren nach einem der vorhergehenden Ansprüche,
**dadurch gekennzeichnet,**
**dass** vor der Helligkeits- oder Farbintensitätsanalyse die Fläche des Verkehrszeichens (1) einer
a) Helligkeitsnormierung und/oder
b) Rauschunterdrückung und/oder
c) Maskierung des die Fläche umgebenden Bereichs und/oder
unterzogen wird.

9. Verfahren nach einem der vorhergehenden Ansprüche,
**dadurch gekennzeichnet, dass**
die Helligkeits- oder Farbintensitätsanalyse der Fläche des Verkehrszeichens (1) entlang einer bestimmten Anzahl an radial verlaufenden Abtaststrahlen (5) durchgeführt wird, wobei die Anzahl an radial verlaufenden Abtaststrahlen (5) von der ermittelten Anzahl an Bildbereichen mit potentiellen Verkehrszeichen (1) in einem Kamerabild abhängt oder von der Anzahl der durch die erste Klassifikationseinheit in einem Kamerabild identifizierten Verkehrszeichen (1) abhängt.

10. Verfahren nach einem der vorhergehenden Ansprüche,
**dadurch gekennzeichnet, dass**
- die Helligkeits- oder Farbintensitätsanalyse der Fläche des Verkehrszeichens (1) entlang einer vorbestimmten minimalen Anzahl an radial verlaufenden Abtaststrahlen (5) durchgeführt wird,
- der aufgrund der Helligkeits- oder Farbintensitätsanalyse extrahierte Bereich an die zweite Klassifikationseinheit zur semantischen Interpretation übergeben wird, und
- sofern die zweite Klassifikationseinheit den extrahierten Bereich nicht erfolgreich klassifizieren kann, die Anzahl der Abtaststrahlen (5) vor einer erneuten Helligkeits- oder Farbintensitätsanalyse und Extraktion eines Bereiches erhöht wird.

11. Verfahren nach Anspruch 10,
**dadurch gekennzeichnet,**
**dass** die Anzahl der Abtaststrahlen (5) nur bis zu einer festgelegten maximalen Anzahl erhöht wird.

12. Verfahren nach einem der vorhergehenden Ansprüche,
**dadurch gekennzeichnet,**
**dass** benachbarte Abtaststrahlen (5) jeweils denselben Winkel zueinander einschließen.

13. Verfahren nach einem der vorhergehenden Ansprüche,
**dadurch gekennzeichnet,**
**dass** vierundzwanzig Abtaststrahlen (5) vorgesehen sind, die vom Ausgangspunkt radial nach außen verlaufen, wobei benachbarte Abtaststrahlen (5) jeweils einen Winkel von 15° zueinander einschließen.

14. Vorrichtung zur Verkehrszeichenerkennung umfassend eine Kamera zur Aufnahme einer Fahrzeugumgebung und eine Bildverarbeitungseinheit mit einer ersten Klassifikationseinheit, die Mittel umfasst, um das Verfahren gemäß einem der Ansprüche 1 bis 13 auszuführen.

## Claims

1. A method for traffic sign recognition in which
- a vehicle environment is recorded using a camera,
- the image data of the camera are analyzed, wherein at least one image area (10) is determined that contains a potential traffic sign (1),
- the image area (10) with the potential traffic sign (1) is submitted to a first classification unit which identifies the potential traffic sign (1) based on at least one class-specific feature as a traffic sign (1) of this specific class,
**characterized in that**
- a brightness or color intensity analysis of the surface of the traffic sign (1), whose class was identified, is performed along radially extending scanning beams (5) starting from a defined starting point within the surface of the traffic sign (1), wherein said brightness or color analysis includes the formation of a one-dimensional gradient of the brightness or color values of the pixels along the scanning beam (5),
- potential contour points (6) of an information-carrying portion (3) of the traffic sign (1) are determined from the brightness or color intensity analysis,
- an area of the surface of the traffic sign (1) is extracted as the information-carrying portion (3) of the traffic sign which includes all potential contour points (6) determined, and
- the extracted area is transferred to a second classification unit for semantic interpretation having regard to the results of the first classification unit.

2. The method according to claim 1,
**characterized in that**
the first classification unit determines the defined starting point for the brightness or color intensity analysis.

3. The method according to claim 1 or 2,
**characterized in that**
the center (8) of the surface of the traffic sign (1) is determined and used as the defined starting point.

4. The method according to any one of the preceding claims,
**characterized in that**
the first classification unit determines the inside surface of the traffic sign (1) of a specific class, and the brightness or color intensity analysis along the scanning beams (5) is only performed on the inside surface of the traffic sign (1).

5. The method according to claim 4,
**characterized in that**,
in a traffic sign (1) with a light background, that area is extracted as the information-carrying portion (3) in which the potential contour points (6) were detected as dark-to-light transitions during the brightness analysis along the scanning beams (5) from the starting point outwards.

6. The method according to claim 4,
**characterized in that**,
in a traffic sign (1) with a dark background, that area is extracted as the information-carrying portion (3) in which the potential contour points (6) were detected as light-to-dark transitions during the brightness analysis along the scanning beams (5) from the starting point outwards.

7. The method according to any one of the preceding claims,
**characterized in that**,
the area of the traffic sign (1) that is extracted as the information-carrying portion (3) is the smallest rectangle (4) that encloses all potential contour points (6).

8. The method according to any one of the preceding claims,
**characterized in that**,
prior to the brightness or color intensity analysis, the surface of the traffic sign (1) is subjected to a
a) brightness standardization, and/or
b) noise suppression, and/or
c) masking of the area surrounding the surface and/or.

9. The method according to any one of the preceding claims,
**characterized in that**,
the brightness or color intensity analysis of the surface of the traffic sign (1) is performed along a specific number of radially extending scanning beams (5), wherein the number of radially extending scanning beams (5) depends on the determined number of image areas with potential traffic signs (1) in a camera image or on the number of traffic signs (1) identified by the first classification unit in a camera image.

10. The method according to any one of the preceding claims,
**characterized in that**,
- the brightness or color intensity analysis of the surface of the traffic sign (1) is performed along a predetermined minimum number of radially extending scanning beams (5),
- the area extracted as a result of the brightness or color intensity analysis is transferred to a second classification unit for semantic interpretation, and
- if the second classification unit cannot successfully classify the extracted area, the number of scanning beams (5) is increased before a new brightness or color intensity analysis and extraction of the area are performed.

11. The method according to claim 10,
**characterized in that**,
the number of scanning beams (5) is increased up to a set maximum number only.

12. The method according to any one of the preceding claims,
**characterized in that**
adjacent scanning beams (5) each are at the same angle to one another.

13. The method according to any one of the preceding claims,
**characterized in that**
twenty four scanning beams (5) are provided which extend outwards in radial direction, wherein adjacent scanning beams (5) each are at an angle of 15° to one another.

14. A device for traffic sign recognition comprising a camera for recording a vehicle environment and an image processing unit with a first classification unit which includes means for performing the method according to one of claims 1 to 13.

## Revendications

1. Procédé de reconnaissance de panneaux de signalisation, dans lequel
- un environnement de véhicule est enregistré à l'aide d'une caméra,
- les données images de la caméra sont analysées, au moins une zone d'image (10) qui contient un panneau de signalisation (1) potentiel étant déterminée,
- la zone d'image (10) avec le panneau de signalisation (1) potentiel étant présentée à une première unité de classification qui, sur la base d'au moins une caractéristique spécifique à une classe, identifie le panneau de signalisation (1) potentiel en tant que panneau de signalisation (1) de cette classe donnée,
**caractérisé en ce**
- **qu'**une analyse de luminosité ou d'intensité de couleur de la surface du panneau de signalisation (1) dont la classe a été identifiée est effectuée le long de rayons de balayage (5) disposés radialement à partir d'un point de départ défini à l'intérieur de la surface du panneau de signalisation (1), l'analyse de luminosité ou d'intensité de couleur comprenant une formation de gradients unidimensionnelle des valeurs de luminosité ou d'intensité de couleur des pixels le long des rayons de balayage (5),
- des points de contour (6) potentiels d'une partie (3), portant les informations, du panneau de signalisation (1) sont déterminés à partir de l'analyse de luminosité ou d'intensité de couleur,
- une zone de la surface du panneau de signalisation (1) est extraite en tant que partie (3) du panneau de signalisation qui porte les informations et qui inclut tous les points de contour (6) potentiels déterminés, et
- la zone extraite est transférée à une deuxième unité de classification pour interprétation sémantique à la lumière des résultats de la première unité de classification.

2. Procédé selon la revendication 1,
**caractérisé en ce que**
la première unité de classification prescrit le point de départ défini pour l'analyse de luminosité ou d'intensité de couleur.

3. Procédé selon la revendication 1 ou 2,
**caractérisé en ce que**
le point central (8) de la surface du panneau de signalisation (1) est déterminé et utilisé en tant que point de départ défini.

4. Procédé selon une des revendications précédentes,
**caractérisé en ce que**
la surface intérieure du panneau de signalisation (1) d'une classe donnée est déterminée par la première unité de classification, et l'analyse de luminosité ou d'intensité de couleur le long des rayons de balayage (5) s'effectue uniquement à l'intérieur de la surface intérieure du panneau de signalisation (1).

5. Procédé selon la revendication 4,
**caractérisé en ce que**,
dans le cas d'un panneau de signalisation (1) avec un arrière-plan clair, c'est la zone pour laquelle, lors de l'analyse de luminosité le long des rayons de balayage (5), les points de contour (6) potentiels ont été déterminés à partir du point de départ vers l'extérieur en tant que transitions sombre-clair qui est extraite en tant que partie (3) portant l'information.

6. Procédé selon la revendication 4,
**caractérisé en ce que**,
dans le cas d'un panneau de signalisation (1) avec un arrière-plan sombre, c'est la zone pour laquelle, lors de l'analyse de luminosité le long des rayons de balayage (5), les points de contour (6) potentiels ont été déterminés à partir du point de départ vers l'extérieur en tant que transitions clair-sombre qui est extraite en tant que partie (3) portant l'information.

7. Procédé selon une des revendications précédentes,
**caractérisé en ce que**
la zone du panneau de signalisation (1) qui est extraite en tant que partie (3) portant l'information est le plus petit rectangle (4) qui inclut tous les points de contour (6) potentiels.

8. Procédé selon une des revendications précédentes,
**caractérisé en ce que**,
avant l'analyse de luminosité ou d'intensité de couleur, la surface du panneau de signalisation (1) est soumise à
a) une normalisation de la luminosité et/ou
b) une suppression du bruit et/ou
c) à un masquage de la zone entourant la surface.

9. Procédé selon une des revendications précédentes,
**caractérisé en ce que**
l'analyse de luminosité ou d'intensité de couleur de la surface du panneau de signalisation (1) est effectuée le long d'un nombre donné de rayons de balayage (5) disposés radialement, le nombre de rayons de balayage (5) disposés radialement étant fonction du nombre déterminé de zones d'image avec des panneaux de signalisation (1) potentiels dans une image de caméra, ou étant fonction du nombre de panneaux de signalisation (1) identifiés par la première unité de classification dans une image de caméra.

10. Procédé selon une des revendications précédentes,
**caractérisé en ce que**
- l'analyse de luminosité ou d'intensité de couleur de la surface du panneau de signalisation (1) est effectuée le long d'un nombre minimal prédéfini de rayons de balayage (5) disposés radialement,
- la zone extraite sur la base de l'analyse de luminosité ou d'intensité de couleur est transférée à la deuxième unité de classification pour interprétation sémantique, et
- si la deuxième unité de classification ne peut pas classer avec succès la zone extraite, le nombre de rayons de balayage (5) est augmenté avant une nouvelle analyse de luminosité ou d'intensité de couleur et extraction d'une zone.

11. Procédé selon la revendication 10,
**caractérisé en ce que**
le nombre de rayons de balayage (5) n'est augmenté que jusqu'à un nombre maximal prescrit.

12. Procédé selon une des revendications précédentes,
**caractérisé en ce que**
des rayons de balayage (5) voisins forment respectivement le même angle les uns par rapport aux autres.

13. Procédé selon une des revendications précédentes,
**caractérisé en ce**
**qu'**il est prévu vingt-quatre rayons de balayage (5) qui sont disposés radialement vers l'extérieur à partir du point de départ, des rayons de balayage (5) voisins formant respectivement un angle de 15° les uns par rapport aux autres.

14. Dispositif pour la reconnaissance de panneaux de signalisation, comprenant une caméra pour l'enregistrement d'un environnement de véhicule et une unité de traitement d'image avec une première unité de classification qui comprend des moyens pour réaliser le procédé selon une des revendications 1 à 13.
